# EUROPEAN PATENT SPECIFICATION

(11) **EP 1 188 605 B1**
(45) Date of publication and mention of the grant of the patent: **24.08.2005**
(21) Application number: 01500225.6
(22) Date of filing: 10.09.2001
(51) Int. Cl.: B60N 2/28

(54) **Infant seat**
Kindersitz
Siège d'enfant

(30) Priority: 14.09.2000 ES 200002304
(43) Date of publication of application: 20.03.2002
(73) Proprietor: PLAY, S.A., 08184 Palau de Plegamans (Barcelona) (ES)
(72) Inventor: Jane Stopp, Joaquin, 08184 Palau de Plegamans (Barcelona) (ES)
(74) Representative: Ponti Sales, Adelaida

(56) References cited:
- EP-A- 0 545 185
- GB-A- 2 268 394
- US-A- 5 522 639

## Description

The present invention refers to an infant seat provided with a handle that can be adjusted at different positions.

At the present time, infant seats provided with a turning handle, designed for the transport of children, are known.

However, to modify the seat's handle position, the person who carries said seat has to use both hands, which in certain instances results in an uncomfortable task when this person has to bend down for attaining the swinging gear, which is generally located in the area where the handle is subjected to the body of the seat.

US-A-5 522 639 discloses an infant seat which comprises a turning handle around the body of the seat and means to arrange said handle, in a stable way, in a plurality of positions respect to the body of the seat, said means to place the handle in a plurality of stables positions can be placed in two positions, a first position in which said handle can be turned with respect to the body of the seat, and a second position in which the rotary motion of the handle with respect to the seat in impeded. Said means comprises an interacting male and female slide member.

EP-A-0 545 185 discloses an infant seat which comprises a turning handle around the body of the seat and means to arrange said handle, in a stable way, in a plurality of positions respect to the body of the seat. Said means comprises a lock releasing knob provided at an intermediate portion of the carrying handle.

GB-A-2 268 394 discloses an infant seat with interchangeable mountings, which comprises a turning handle around the body of the seat and means to arrange said handle, in a stable way, in a plurality of positions respect to the body of the seat. Said means comprises a release bar provided at the centre of the handle.

With the infant seat of the invention, it is possible to solve the aforementioned drawbacks, exhibiting other advantages that will be described below.

The infant seat of the invention comprises a turning handle around the body of the seat and means to place said handle, in a stable way, in a plurality of positions with respect to the body of the seat, said means to place the handle in a plurality of stable positions comprise a single operating lever that can be placed in two positions, a first position in which said handle can be turned with respect to the body of the seat, and a second position in which the rotary motion of the handle with respect to the body of the seat is impeded.

Thanks to this feature, the handle of the seat can be easily and comfortably positioned, so that its position may be changed by operating the sole lever with just one hand.

Said means to place the handle in a plurality of stable positions also comprise, to each side of said handle:
- a bushing, integral with the body of the seat, provided with a plurality of recesses;
- a moveable blocking-element, integral in revolution with said handle and complementary with said recesses, which, in the second position of said lever, is introduced in one of these recesses by the action of elastic means, impeding the rotary motion of the handle with respect to the body of the seat; and
- a wire rope attached by one end to said blocking element and by the other end to said lever, being able to wind around a shaft integral with said lever, so that positioning the lever in said first position causes said wire rope to wind around the shaft and, as a result, the displacement of said blocking element against the action of the elastic means leaving the interior of one of said recesses, and allowing the handle to turn with respect to the body of the seat.

Preferably, said lever is placed in the upper part of the handle, which facilitates gaining access to it and the handling thereof.

For the best understanding of what is described in the present specification, the following drawings are included, only by way of example, in which a practical case of embodiment of the infant seat of the present invention is represented.

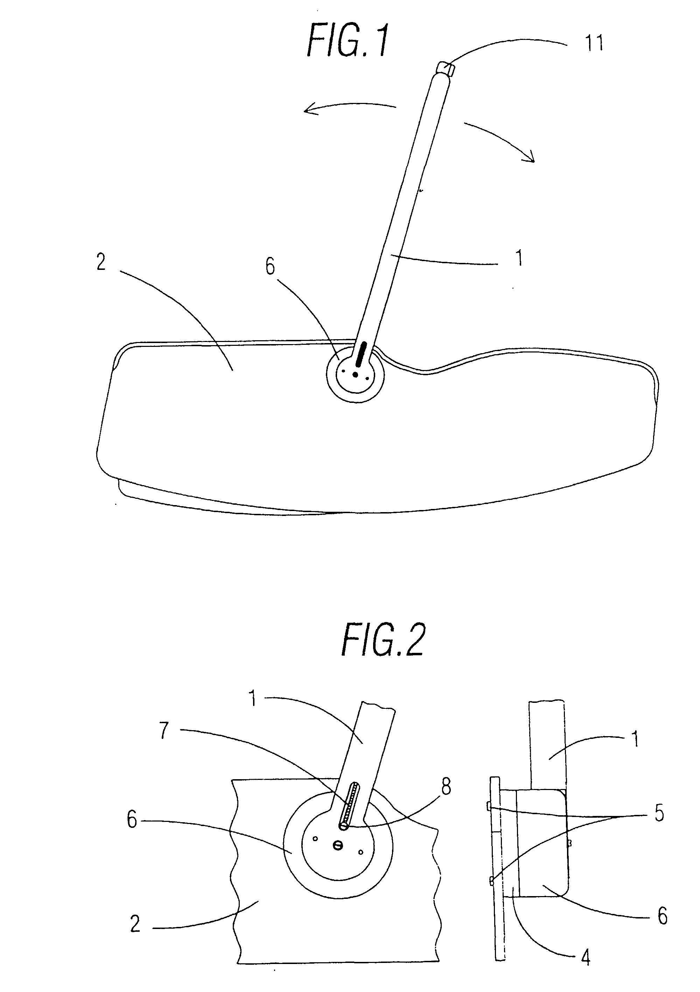

In the drawings, figure 1 is a side elevation view of the infant seat of the present invention;
Figure 2 is a detailed side and front elevation view of the area enclosing the blocking element;
Figure 3 is a detailed side elevation view of the inside of the moveable blocking-element;
Figure 4 is a side and plan elevation view of the operating lever.

As it can be appreciated in figure 1, the infant seat of the present invention comprises a turning handle 1 around the body 2 of the seat, and means 3 to place said handle 1, in a stable way, in different positions with respect to the body 2 of the seat.

The means to place the handle 1 in different positions comprise to each side of the seat 2 a bushing 4 integral with the body 2 of the seat through nut and bolt fastenings 5, and they are provided in their interior with a plurality of recesses (not represented), and a blocking element 6, integral with said handle (see figures 1 and 2) and complementary with said grooves.

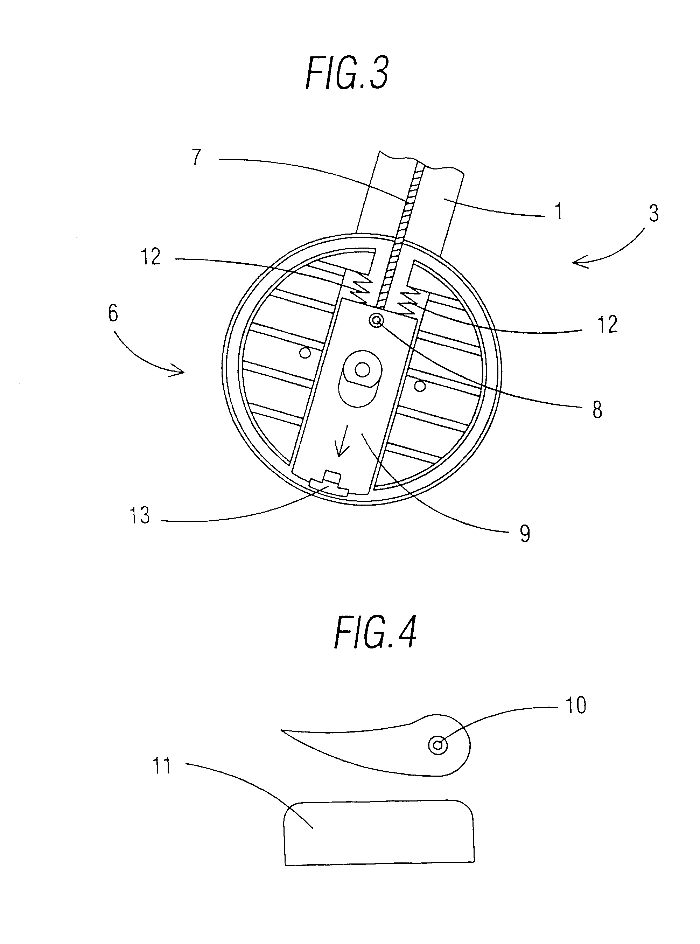

Also, said means 3 include a wire rope 7 that passes across the interior of handle 1 and is attached by one of its ends to the blocking element 6 by means of a screw 8 integral with an element 9 located inside said blocking element 6, as it may be appreciated in figure 3, and by the other end said wire rope 7 is attached to a shaft 10 integral with a lever 11 located in the upper part of handle 1.

Figure 4 shows the shape of lever 11, which facilitates the movement thereof.

When the arrangement of handle 1 is to be changed to a different position, lever 11 must be first turned in a sense causing the wire rope 7 to wind around the shaft 10 and, as a result, the displacement of element 9 upwards against the action of a spring 12. Subsequently, the lower end of the element 9, which is provided with a flange 13, leaves the interior of one of the recesses in the bushing 4, allowing the rotary motion of handle 1 with respect to the body 2 of the seat.

Although reference has been made to a concrete embodiment of the invention, it will be apparent to those skilled in the art that the described infant seat is susceptible of many changes and modifications, and that all the aforementioned particulars can be replaced with other technically equivalent ones, without departing from the protection scope defined by the appended claims.

## Claims

1. Infant seat, which comprises a turning handle (1) around the body (2) of the seat and means (3) to arrange said handle (1), in a stable way, in a plurality of positions with respect to the body (2) of the seat, said means (3) to place the handle (1) in a plurality of stable positions can be placed in two positions, a first position in which said handle (1) can be turned with respect to the body (2) of the seat, and a second position in which the rotary motion of the handle (1) with respect to the body (2) of the seat is impeded, **characterized in that** said means (3) comprises a wire rope (7) attached by one end to a movable blocking element (6) and by the other end to a single operating lever (11), the wire rope (7) being able to wind around a shaft (10) integral with said lever (11).

2. Infant seat according to claim 1, **characterized in that** said means (3) to arrange the handle (1) in a plurality of stable positions also comprise, to each side of said handle (1):
- a bushing (4) integral with the body (2) of the seat and provided with a plurality of recesses;
- a moveable blocking-element (6), integral in revolution with said handle (1) and complementary with said recesses, which, in the second position of said lever (11), is introduced in one of said recesses by the action of the elastic means (12), impeding the rotary motion of the handle (1) with respect to the body (2) of the seat; so that placement of the lever (11) in said first position causes said wire rope (7) to wind around the shaft (10) and, as a result, the displacement of said blocking element (6) against the action of the elastic means (12) leaving the interior of one of said recesses, and allowing the rotary motion of the handle (1) with respect to the body (2) of the seat.

3. Infant seat according to claim 1 or 2, **characterized in that** said lever (11) is located in the upper part of the handle (1).

## Patentansprüche

1. Kindersitz mit einer Drehhandhabe (1) um den Körper (2) des Sitzes und einer Einrichtung (3) zur Anordnung der Handhabe (1) in einer stabilen Weise in eine Vielzahl von Stellungen bezüglich des Körpers (2) des Sitzes, wobei die Einrichtung (3) zur Anordnung der Handhabe (1) in eine Vielzahl von stabilen Stellungen in zwei Stellungen platzierbar ist, eine erste Stellung, in der die Handhabe (1) bezüglich des Körpers (2) des Sitzes drehbar ist, und eine zweite Stellung, in der die Drehbewegung der Handhabe (1) bezüglich des Körpers (2) verhindert ist, **dadurch gekennzeichnet, dass** die Einrichtung (3) ein Drahtseil (7) aufweist, das mit einem Ende an einem bewegbaren Blockierelement (6) und mit dem anderen Ende einen einzelnen Betätigungshebel (11) angebracht ist, wobei das Drahtseil (7) um eine Welle (10) windbar ist, welche einstückig mit dem Hebel (11) gebildet ist.

2. Kindersitz nach Anspruch 1, **dadurch gekennzeichnet, dass** die Einrichtung (3) zur Anordnung der Handhabe (1) in eine Vielzahl von stabilen Stellungen weiterhin an jeder Seite der Handhabe (1) Folgendes aufweist:
- eine Buchse (4), die einstückig mit dem Körper (2) des Sitzes gebildet und mit einer Vielzahl von Ausnehmungen versehen ist;
- ein bewegbares Blockierelement (6), das einstückig mit der Handhabe (1) drehbar und komplementär zu den Ausnehmungen ist, welches in der zweiten Stellung des Hebels (11) in eine der Ausnehmungen durch die Wirkung der elastischen Einrichtung (12) eingeführt ist, wobei sie die Drehbewegung der Handhabe (1) bezüglich des Körpers (2) des Sitzes verhindert;
Wobei die Anordnung des Hebels (11) in die erste Stellung das Aufwickeln des Drahtseils (7) um die Welle (10) und **dadurch** resultierend eine Verlagerung des Blockierelements (6) gegen die Wirkung der elastischen Einrichtung (12), wodurch das Innere einer der Ausnehmungen verlässt, veranlasst und die Drehbewegung der Handhabe (1) bezüglich des Körpers (2) des Sitzes ermöglicht.

3. Kindersitz nach Anspruch 1 oder 2, **dadurch gekennzeichnet, dass** der Hebel (11) in dem oberen Abschnitt der Handhabe (1) angeordnet ist.

## Revendications

1. Siège d'enfant, qui comprend une poignée (1) tournant autour du corps (2) du siège et des moyens (3) destinés à placer ladite poignée (1), de manière stable, dans une pluralité de positions par rapport au corps (2) du siège, lesdits moyens (3) destinés à placer la poignée (1) dans une pluralité de positions stables pouvant être placés dans deux positions, une première position dans laquelle ladite poignée (1) peut être tournée par rapport au corps (2) du siège, et une deuxième position dans laquelle le mouvement de rotation de la poignée (1) par rapport au corps (2) du siège est empêché, **caractérisé en ce que** lesdits moyens (3) comprennent un câble (7) attaché par une extrémité à un élément de blocage mobile (6) et par l'autre extrémité à un levier de commande unique (11), le câble (7) étant apte à s'enrouler autour d'un arbre (10) solidaire dudit levier (11).

2. Siège d'enfant selon la revendication 1, **caractérisé en ce que** lesdits moyens (3) destinés à placer la poignée (1) dans une pluralité de positions stables comprennent également, de chaque côté de ladite poignée (1) :
- une douille (4) solidaire du corps (2) du siège et dotée d'une pluralité d'évidements ;
- un élément de blocage mobile (6), solidaire de révolution avec ladite poignée (1) et complémentaire desdits évidements, qui, dans la deuxième position dudit levier (11), est introduit dans l'un desdits évidements par l'action des moyens élastiques (12), empêchant le mouvement de rotation de la poignée (1) par rapport au corps (2) du siège, de sorte que la mise en place du levier (11) dans ladite première position provoque l'enroulement dudit câble (7) autour de l'arbre (10) et, en conséquence, le déplacement dudit élément de blocage (6) en s'opposant à l'action des moyens élastiques (12) en quittant l'intérieur de l'un desdits évidements, et permettant le mouvement de rotation de la poignée (1) par rapport au corps (2) du siège.

3. Siège d'enfant selon la revendication 1 ou 2, **caractérisé en ce que** ledit levier (11) est placé dans la partie supérieure de la poignée (1).
